# EUROPÄISCHE PATENTSCHRIFT

(11) **EP 0 772 190 B1**
(45) Veröffentlichungstag und Bekanntmachung des Hinweises auf die Patenterteilung: **21.07.2004**
(21) Anmeldenummer: 96117134.5
(22) Anmeldetag: 25.10.1996
(51) Int. Cl.: G11B 15/12, G11B 15/14

(54) **Verfahren und Schaltung zur Erzeugung von synchronen Steuersignalen in Videorekordern**
Method and circuit for generating synchronous control signals in videorecorders
Méthode et circuit pour la génération de signaux synchrones de commande dans des enregistreurs vidéo

(30) Priorität: 02.11.1995 DE 19540752
(43) Veröffentlichungstag der Anmeldung: 07.05.1997
(73) Patentinhaber: DEUTSCHE THOMSON-BRANDT GMBH, 78048 Villingen-Schwenningen (DE)
(72) Erfinder: Mahr, Peter, 78126 Königsfeld (DE); Reiner, Gerhard, 78052 Villingen-Schwenningen (DE)
(74) Vertreter: Rossmanith, Manfred, Dr.

(56) Entgegenhaltungen:
- EP-A- 0 391 009
- WO-A-87/02500
- DE-A- 3 739 283
- DE-A- 4 338 391
- US-A- 5 357 382
- PATENT ABSTRACTS OF JAPAN vol. 010, no. 160 (P-465), 7. Juni 1986 (1986-06-07) & JP 61 013464 A (HITACHI SEISAKUSHO KK), 21. Januar 1986 (1986-01-21)
- LINK H ET AL: "ALIGNMENT-FREE DIGITAL VIDEORECORDER-SERVO CONCEPT" IEEE TRANSACTIONS ON CONSUMER ELECTRONICS,US,IEEE INC. NEW YORK, Bd. 35, Nr. 1, 1. Februar 1989 (1989-02-01), Seiten 11-15, XP000104790 ISSN: 0098-3063
- LINK H ET AL: "ALIGNMENT FREE DIGITAL VIDEORECORDER-SERVO CONCEPT" PROCEEDINGS OF THE INTERNATIONAL CONFERENCE ON CONSUMER ELECTRONICS. (ICCE),US,NEW YORK, IEEE, Bd. CONF. 7, 8. Juni 1988 (1988-06-08), Seiten 92-93, XP000043927

## Beschreibung

Die Erfindung betrifft ein Verfahren und eine Vorrichtung zum Erzeugen von synchronen digitalen Steuersignalen in Videorekordern, insbesondere in digitalen Videorekordern.

Das Servosystem bekannter digitaler Videorekorder weist eine ausgefeilte Taktsteuerschaltung auf, da zeitlich präzis definierte Steuersignale zur Koordinierung bzw. Verkopplung zwischen Motorsteuerung, zum Schalten der Kopfverstärker und zum Datenaustausch zwischen dem Codec- und dem Servosystem notwendig sind. Zur Definition derartiger Steuersignale liefert mit jeder Umdrehung des Scannermotors bzw. der Kopftrommel ein Sensor ein Positionspuls PU, der die Basis zur Synchronisierung der Steuersignale bildet. Unter anderem wird mit diesem Positionspuls PU des Scannermotors die Synchronisation mit den ankommenden Videobildern bzw. Videorahmen durchgeführt. Erwünschte Randbedingungen für die Steuersignale hierbei sind Jitterfreiheit, Synchronität, programmierbarer Phasenversatz und eine geringe Echtzeitbelastung des Controllers.

Um den gewünschten Grund- und Spezialfunktionen eines Videorekorders, insbesondere eines digitalen Videorekorders gerecht zu werden, ist es zumindest nötig, folgende Schaltpulse bereitzustellen und zu erzeugen:
- ein Kopfschaltsignal HS1 zur Umschaltung von Kopf 1 und dem um 180° versetzten Kopf 2,
- ein Kopfschaltsignal HS2 zur Umschaltung von Kopf 3 und dem 180° versetzten Kopf 4,
- ein Record/Play-Umschaltsignal, und
- ein synchrones Spursignal zur alternativen Spurregelung mittels der Längsspur.

Sowohl bei SD-, wie auch bei HD-Rekordern benötigt man flexible steuerbare Kopfschaltsignale, beispielsweise HS1 und HS2, welche den Schreib- und Lesebereich definieren. Bei 4-Kopfsystemen muß bedingt durch den geringen Abstand der Doppelköpfe von etwa 550 µm ein sehr kleiner zeitlicher Abstand der beiden Flanken der Kopfschaltsignale möglich sein, dieser Abstand beträgt bei dem genannten Kopfabstand ca. 55 µs. Um die im digitalen Video-Codec-Standard (DVC-Standard) definierten Spezifikationen einzuhalten, ist es außerdem erforderlich, den Schreibbeginn bezogen auf die Bandkante einzustellen. Die mechanischen Toleranzen können dabei durch eine programmierbare Zeitverzögerung zwischen dem an der Kopftrommel angebrachten Sensor zur Erzeugung des PU-Signals und der Einschaltflanke des Kopfschaltsignals ausgeglichen werden. Dies kann sowohl mit einem manuellen Justiervorgang erreicht werden, sowie auch mittels eines Mikrocomputers oder Mikrocontrollers automatisch erfolgen. Durch Auswerten von speziellen Informationen auf dem Band und deren zeitliche Zuordnung wird ein Zeitverzögerungswert ermittelt, der die mechanischen Begebenheiten des jeweiligen Gerätes normiert und somit dem geforderten DVC-Standard gerecht wird.

Das Record/Play-Signal ist ebenfalls zeitsynchron mit dem Spurbeginn bzw. dem Rahmenbeginn (Bildbeginn) umzuschalten. Bei verschiedenen Sonderbetriebsarten, wie Assembleschnitt, Insertschnitt und Nachvertonung müssen an ganz bestimmten Stellen einer Spur des Videobandes Daten gelesen und eingefügt werden. Bezogen auf den Spuranfang ist daher ein zeitlich präzises Schreibfenster zu erzeugen, das das Einschreiben von Daten steuert.

Unter Verwendung eines Markierungssignals, das pro Kopftrommelumdrehung erzeugt wird und maßgebend für deren jeweilige Winkelphase ist, ist es aus der WO-A-87/02500 bekannt, Kopfschalt- und Bildsynchronsignale für einen konventionellen Videorecorder zu erzeugen. Zu diesem Zweck werden durch das Markierungssignal jeweils für die Zeitdauer einer Kopftrommelumdrehung den Kopfschalt- und Bildsynchronsignalen zugeordnete Zählungen von Systemtakt-Impulsen in einem ersten Zähler und für die Zeitdauer der jeweilig nachfolgenden Kopftrommelumdrehung entsprechend weitere Zählungen von Systemtakt-Impulsen in einem zweiten Zähler ausgelöst, wobei das jeweilige momentane Zählergebnis mit dem entsprechenden der vorherigen Kopftrommelumdrehung verglichen wird, um im jeweiligen Fall einer Übereinstimmung ein entsprechendes Kopfschalt- bzw. Bildsynchronsignal - z.B. mittels einer Logikschaltung - zu erzeugen. Durch entsprechendes Umschalten der Systemtakt-Signalzuführung in Verbindung mit dem Rücksetzen des entsprechenden Zählers durch das Markierungssignal ist also jeweils einer der beiden Zähler mit dem Zählen von Systemtakt-Impulsen beschäftigt während der andere als Speicher fungiert.

Aus der DE-A-43 38 391 ist ein Magnetbandgerät zur Aufzeichnung und/oder Wiedergabe digitaler Videosignale mit einer Vielzahl auf einer rotierenden Kopftrommel sich jeweils gegenüberliegend angeordneter Schreib- und Leseköpfe bekannt, bei dem ein Phasendatensignal vorgesehen ist, das aus einer periodisch wiederkehrenden Impulsfolge besteht, die durch Synchronimpulse begrenzt ist und die zwischen den Synchronimpulsen eine bitserielle Folge von zu Gruppen zusammengefassten Impulsen enthält, deren Impulsflanken das zeitliche Verhalten der Signale von und zu den Schreib- bzw. Leseköpfen steuern. Hierzu wird ein Umdrehungsimpulssignals, das pro Kopftrommelumdrehung erzeugt wird maßgebend für deren jeweilige Winkelphase ist, einer als Frequenzvervielfacher arbeitenden Phasenregelschleife sowie dem Rücksetzeingang eines Adresszählers zugeführt, dessen Signalausgang mit dem Adresseingang eines Nur-Lese-Speichers verbunden ist. Dieser Speicher enthält eine Tabelle, die so angelegt, dass in Abhängigkeit anliegender Datenworte bestimmte Datenwortwerte ausgegeben werden, deren sequentielle Folge der Impulsfolge des Phasendatensignals entspricht, bzw. dass die binäre Bitfolge in den Datenworten am Datenausgang dieses Speichers mit der Drehposition der Schreib- bzw. Leseköpfe zeitlich korrespondiert. Die Genauigkeit der dabei erzielten Zuordnung der jeweiligen Kopfposition hängt im wesentlichen von dem Vervielfachungsfaktor der als Frequenzvervielfacher arbeitenden Phasenregelregelschleife ab.

Der Erfindung liegt daher die Aufgabe zugrunde, ein Verfahren und eine Vorrichtung zu schaffen, worin zeitlich präzise, synchrone Steuersignale erzeugt werden.

Diese Aufgabe wird durch die Merkmale der Ansprüche 1 und 7 gelöst. Weitere vorteilhafte Ausgestaltungen der Erfindung sind den Unteransprüchen zu entnehmen.

Die vorliegende Erfindung betrifft ein Verfahren zur Erzeugung digitaler synchroner Steuerpulse für einen Videorekorder, insbesondere einen digitalen Videorekorder, wobei das Verfahren die folgenden Schritte aufweist:
a) Erfassen eines Positionspulses PU des Scannermotors bzw. der Kopftrommel, der zur Definition eines Zeitnullpunktes t₀ verwendet wird und die Umdrehungsperiode des Scannermotors bzw. damit der Kopftrommel bestimmt,
b) Berechnen der Zeitmarken t₁, t₂, .. tn der Steuerpulse, die für die folgende Periode erforderlich sind, sowie der Bitmuster der Steuersignale zu den entsprechenden Zeitmarken,
c) Speichern der Zeitmarken t₁ - tₙ und der zu den entsprechenden Zeitmarken gehörenden Bitmuster,
d) parallele Ausgabe des entsprechenden Bitmusters mit dem Eintreten einer entsprechenden Zeitmarke.

Im allgemeinen koinzidiert der Zeitnullpunkt t₀ mit dem Beginn eines Bildrahmens.

Als eine Zeitmarke wird ein solcher Zeitpunkt bezeichnet, an dem ein oder mehrere der im allgemeinen rechteckige Steuersignale ihren Pegel ändern. Demzufolge gibt es für eine Zeitmarke jeweils ein Bitmuster, das die Pegel der einzelnen Signale enthält. Dieses Bitmuster einer Zeitmarke t₁, ..tₙ wird als k-bit breites Datenwort abgespeichert, wobei k die Anzahl der Signale, d.h. schaltungstechnisch betrachtet die Anzahl der Steuerleitungen darstellt.

Diese Datenwörter, deren Anzahl gleich der Anzahl n der Zeitmarken ist, werden als Datenfeld, d.h. als eine k x n Matrix, abgespeichert.

Weiterhin wird das Datenwort der Zeitmarke tᵢ nach dem Verstreichen der vorangegangenen Zeitmarke tᵢ₋₁ in einen steuerbaren Ausgabespeicher geladen, der zur präzisen Zeitmarke tᵢ die Ausgabe des Datenworts bewirkt, wobei 1 <= i <= n ist. Mit anderen Worten, das Datenfeld wird entsprechend der vorangegangenen Matrixdefinition spaltenweise ausgegeben.

Weiterhin umfaßt die Erfindung eine Schaltung zur Durchführung des Verfahrens mit einem Mikrocontroller und einem steuerbaren Ausgabespeicher, wobei der Mikrocontroller die Funktionsblöcke Capture-Register, Timer, Berechnungseinheit und Vergleicher aufweist. Dabei dient das Capture-Register zum Aufnehmen des Positionspulses PU, der Timer zum Bestimmen der seit dem Zeitpunkt t₀ verstrichenen Zeit, wobei der Timer vom Positionspuls PU getriggert wird, und der Vergleicher vergleicht den Sollwert der von der Berechnungseinheit gelieferten Zeitmarke mit der tatsächlich seit t₀ verstrichenen Zeit, die vom Timer bereitgestellt wird, so daß im Falle der Gleichheit der steuerbare Ausgabespeicher, der das auszugebende Datenwort von der Berechnungseinheit geladen hat, dieses ausgibt.

Vorteilhafterweise wird der steuerbare Ausgabespeicher durch ein Latch realisiert. Zum Auslösen des Latchs ist zwischen dem Latch und dem Vergleicher der erfindungsgemäßen Schaltung ein Flip-Flop zur Erzeugung eines Strobe-Pulses angeordnet, dessen Set-Eingang vom Vergleicher und dessen Reset-Eingang von der Berechnungseinheit 5 angesteuert wird.

In einer bevorzugten Ausführungsform wird das auszugebende Datenwort einer Zeitmarke über einen seriellen Bus von der Berechnungseinheit in einen Seriell/Parallel-Wandler gegeben, der die Daten für das Latch aufbereitet.

Vorteilhafterweise kann der Seriell/Parallel-Wandler und das Latch durch einen programmierbaren Logikbaustein, im folgenden als PLD bezeichnet, gebildet werden, wobei mittel des Clock- und des Data-Eingangs des PLDs das auszugebende Datenwort einer Zeitmarke in den PLD eingetaktet und mittels eines Strobe-Pulses in das Ausgabelatch 10 des PLDs geladen und ausgegeben wird.

Weiterhin kann nach erfolgter Ausgabe des Datenwortes einer Zeitmarke durch das Latch des PLD das nächste auszugebende Datenwort seriell in das PLD eingelesen werden, so daß das PLD zur Ausgabe des Datenworts vorbereitet ist. Mit anderen Worten, unmittelbar nachdem das Datenwort der Zeitmarke tᵢ₋₁ ausgegeben wurde, wird das Datenwort der Zeitmarke tᵢ in das PLD geladen, so daß das Datenwort beim Eintreten der Zeitmarke tᵢ ausgegeben werden kann.

Schließlich kann das PLD in der erfindungsgemäßen Schaltung zusätzlich als ein programmierbarer Capstan FG-Teiler verwendet werden.

Die Vorteile des erfindungsgemäßen Verfahrens und der Schaltung liegen in einer schnellen Erzeugung der verschiedenen synchronen Steuersignale, einer jitterfreien Ausgabe von zeitkritischen Pulsen, einer preisgünstigen Hard- und Softwarelösung hinsichtlich der Pinbelegung und der Mikrocontrollerverarbeitungszeit, und einer einfachen Anpassung an verschiedene Servosysteme, Kopfkonfigurationen, Umdrehungsgeschwindigkeiten der Kopftrommel oder dergleichen begründet.

Eine bevorzugte Ausführungsform des Verfahrens und der Schaltung wird anhand der nachfolgenden Figuren erläutert, in denen:
Fig. 1 im oberen Teil Zeitablaufdiagramme wesentlicher Signale und im unteren Teil die Zeitmarken mit dem dazugehörigen Datenfeld zeigt,
Fig. 2 eine erfindungsgemäße Schaltung zur Durchführung des Verfahrens zeigt, und
Fig. 3 das Prinzipbild eines als Seriell/Parallel-Wandler und Latch verwendeten programmierbaren Logikbausteins PLD zeigt.

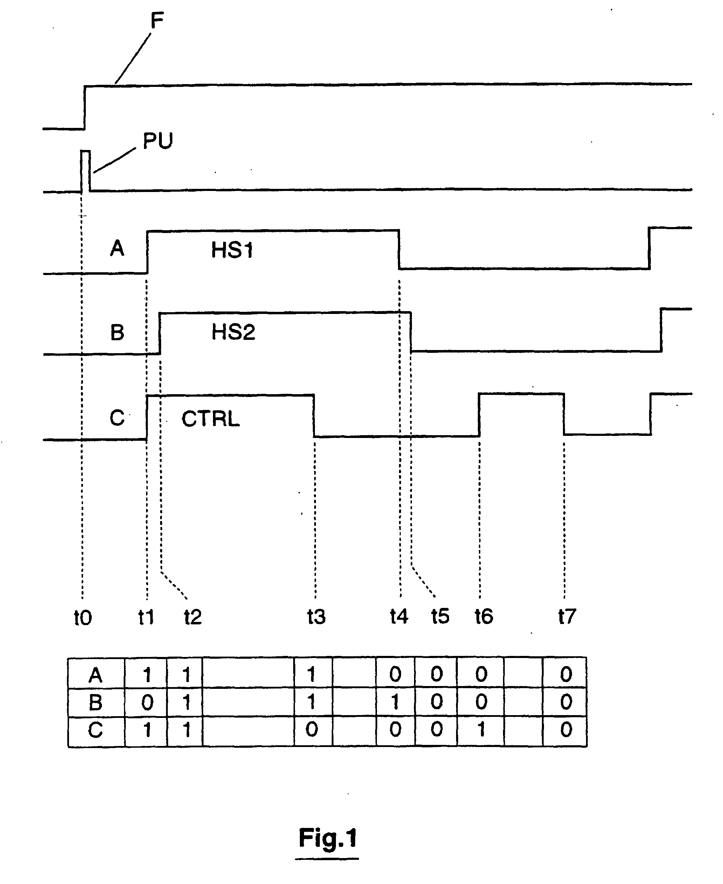

Fig. 1 zeigt im oberen Teil in beispielhafter Weise die Zeitablaufdiagramme fünf wesentlicher Signale, wobei das oberste Diagramm das Bild- oder Framesignal F darstellt, das zweite Diagramm das vom Scannermotor gelieferte Positionssignal PU zeigt, das den Zeitpunkt t₀, also den Zeitnullpunkt, festlegt, der synchron mit dem Framesignal F ist. Mit A, B und C werden die im dritten, vierten und fünften Diagramm dargestellten Ausgangssignale bezeichnet, wobei der Kanal A das Kopfschaltsignal HS1, der Kanal B das Kopfschaltsignal HS2, und der Kanal C ein Steuersignal CTRL darstellt. Wie aus den Diagrammen ersichtlich definiert die ansteigende Flanke des Kopfschaltsignals HS1, die synchron mit dem Steuersignal CTRL ist, eine Zeitmarke t₁, die ansteigende Flanke des zweiten Kopfschaltsignals HS2, die bei der Verwendung von Doppelköpfen zeitlich um 55 µs aufgrund des Kopfabstands verschoben ist, eine Zeitmarke t₂, das Ende des Steuersignals CTRL eine Zeitmarke t₃, das Ende des ersten Kopfschaltsignals HS1 eine Zeitmarke t₄, die fallende Flanke des zweiten Kopfschaltsignals HS2 eine Zeitmarke t₅, die ansteigende Flanke des Steuersignals CTRL eine weitere Zeitmarke t₆ und die dazugehörige abfallende Flanke des zweiten Steuersignales CTRL eine weitere Zeitmarke t₇. Die Anzahl n = 7 ist hier nur beispielhatt zu verstehen, eine andere, insbesondere größere Anzahl ist möglich.

Im unteren Teil der Fig. 1 ist ein den Zeitmarken zugeordnetes Datenfeld dargestellt, das entsprechend den drei Steuerkanälen A, B, C aus drei Bit breiten Datenwörtern besteht, die entsprechend den Zeitmarken t₁ bis in diesem Falle t₇ hintereinander angeordnet sind, so daß eine Lookup-Matrix oder eine Lookup-Tabelle gebildet wird, die in diesem Falle spaltenweise abgearbeitet wird. Aus der Zuordnung der Pulsdiagramme zu den Zeitmarken t₁ bis t₇ wird deutlich, daß die Zeitmarke t₁ mit dem Bitmuster 101, die Zeitmarke t₂ mit dem Bitmuster 111, die Zeitmarke t₃ mit dem Bitmuster 110, die Zeitmarke t₄ mit dem Bitmuster 010, die Zeitmarke t₅ mit dem Bitmuster 000, die Zeitmarke t₆ mit dem Bitmuster 001 und die Zeitmarke t₇ mit den Bitmustern 000 verbunden ist, wobei den Steuerkanälen A, B, C die Bits von links nach rechts zugeordnet sind. Im vorliegenden Falle kann das Bit des Kanals A als niedrigstwertiges Bit (LSB) und der Kanal C als höchstwertiges Bit (MSB) definiert werden, wobei diese Zuordnung willkürlich ist und von der Anwendung abhängt.

Der Algorithmus zur Erstellung der Lookup-Tabelle bzw. des Datenfeldes errechnet ausgehend von einem Zeitnullpunkt t₀, der durch das Eintreffen des Positionspulses PU definiert ist, die Zeitmarken t₁ bis t₇, im allgemeinen Falle t₁ bis tₙ, wobei n eine natürliche Zahl ist entsprechend der Anzahl der benötigten Zeitmarken, in denen auf einem der Steuerleitungen eine Umschaltung des Steuerpulses zu geschehen hat. Das so errechnete Bitmuster wird in dem Datenfeld gespeichert und mit dem Eintreten der Zeitmarke auf die Signalleitungen, hier A, B, C, gelegt.

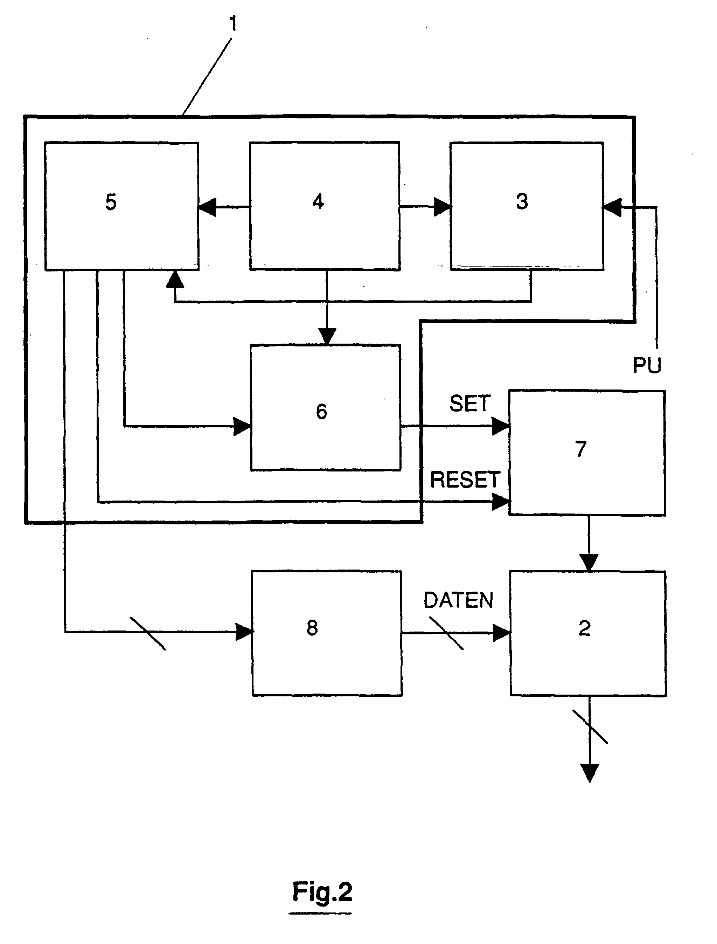

Fig. 2 zeigt die schaltungsmäßige Realisierung des Verfahrens nach der Fig. 1. Die Schaltung besteht dabei im wesentlichen aus einem Mikrocontroller 1 und einem steuerbaren Ausgabespeicher 2, der im vorliegenden Fall durch ein Achtfach-Latch 2 realisiert ist. Der Mikrocontroller 1 realisiert bzw. umfaßt die Funktionen eines Capture Registers 3, eines 16-Bit breiten Zeitgebers 4, einer Berechnungseinheit 5 mit entsprechendem Arbeitsspeicher (nicht dargestellt) und eines Vergleichers 6. Die Funktion der Schaltung ist die folgende: mit der Eingabe des Positionspulses PU, der den Ort der Kopftrommel angibt, in das Capture-Register 3 wird der Zeitnullpunkt definiert und mit diesem Eingang des Pulses PU berechnet die Berechnungseinheit 5 die notwendigen Zeitmarken und legt diese in ein Dateifeld ab. Der Zeitgeber 4 wird mit dem Eingang des Positionspulses PU getriggert und gibt seinen IST-Wert an einen Vergleicher 6. Der Vergleicher 6, der durch ein Compare-Register des Mikrocontrollers 1 gebildet werden kann, erhält als Sollwert die nächste von der Berechnungseinheit 5 berechnete Zeitmarke. Bei einer Gleichheit des Ist- und des Sollwerts im Vergleicher 6 wird ein Puls auf den Set-Eingang eines Flip-Flops 7 gegeben, welches daraufhin einen Strobepuls erzeugt und an das Latch 2 ausgibt. Das Latch 2 enthält die auszugebenden Daten der entsprechenden Zeitmarke, die vor dem Eintreten der Zeitmarke über einen Seriell/Parallel-Wandler 8 aus der Berechnungseinheit 5 geladen wurden. Mit dem Eintreffen des Strobesignals an dem Latch 2 gibt dieses dann die als Schalt- bzw. Steuersignale verwendeten Daten parallel aus, so daß eine exakte Synchronisierung dieser Signale gegeben ist.

In der bevorzugten Ausführungsform ist die Verbindung zwischen der Berechnungseinheit 5 und dem Seriell/Parallel-Wandler 8 als 2-Draht Bus ausgelegt Die Verbindung zwischen dem Wandler 8 und dem Latch 2 ist parallel, hier 8-bit breit, ausgelegt.

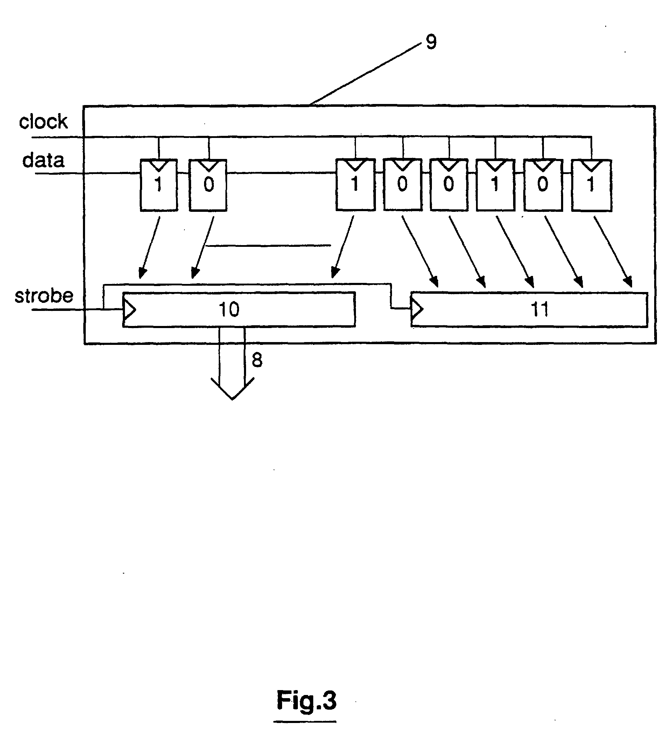

Fig. 3 zeigt die Realisierung des Latchs 2 und des Seriell/Parallel-Wandlers 8 in Form eines programmierbaren Logikbausteins (PLD = Programmable Logic Device). Mittels der beiden Leitungen "Data" und "Clock" werden das 8 Bit breite Datenwort und ein hier nicht weiter erklärter 5 Bit breiter Capstan FG-Teilerwert als zusammengesetztes 13 Bit-Datenwort vom Mikrocontroller seriell in das PLD 9 getaktet. Zwar wurden in der Fig. 1 nur das Bereitstellen von drei Steuersignalen HS1, HS2 und CTRL erläutert. Allerdings ist es selbstverständlich, daß weitere parallele Steuersignale generiert werden können, falls dies notwendig ist. Mit dem Eintreffen des Strobesignals werden die beiden Datenwortsegmente in die beiden Latches 10 und 11 des PLD 9 geladen und ausgegeben. Nach erfolgter Ausgabe der Steuersignale über das Latch 10 des PLD 9 kann bereits das nächste auszugebende Datenwort seriell in das PLD eingelesen werden.

### Bezugszeichenliste

- 1 -: µ-Controller
- 2 -: Ausgabespeicher (Latch)
- 3 -: Capture Register
- 4 -: 16 Bit-Timer
- 5 -: Berechnungseinheit
- 6 -: Vergleicher
- 7 -: Flip-Flop
- 8 -: Seriell/Parallel-Wandler
- 9 -: PLD
- 10 -: Latch des PLD
- 11 -: Latch des PLD
- A -: Ausgang
- B -: Ausgang
- C -: Ausgang
- HS1 -: Kopfschaltsignal
- HS2 -: Kopfschaltsignal
- CTRL -: Controlsignal
- PU -: Positionsignal
- F -: Framesignal

## Patentansprüche

1. Verfahren zur Erzeugung synchroner digitaler Steuersignale für einen Videorecorder mit rotierender Kopftrommel, bei dem jeweils ein die Periode einer Kopftrommelumdrehung kennzeichnender Positionspuls (PU) zur Definition eines Zeitnullpunktes (t₀) verwendet wird, **gekennzeichnet durch** die nachfolgenden Schritte:
a) Berechnen aller Zeitmarken (t₁- tₙ) der Steuersignale, die für die folgende Periode eines Bildrahmens (F) erforderlich sind, und der zu einer Zeitmarke gehörenden Bitmuster der Steuersignale,
b) Speichern der Zeitmarken (t₁ - tₙ) und der auszugebenden Bitmuster und
c) Parallele Ausgabe des entsprechenden Bitmusters zur entsprechenden Zeitmarke (t₁ - tₙ).

2. Verfahren nach Anspruch 1, **dadurch gekennzeichnet, daß** der Zeitnullpunkt (to) mit dem Beginn eines Bildrahmens (F) koinzidiert.

3. Verfahren nach einem der Ansprüche 1 oder 2, **dadurch gekennzeichnet, daß** das Bitmuster einer Zeitmarke (t₁, ..tₙ) als k-bitbreites Datenwort abgespeichert wird.

4. Verfahren nach Anspruch 3, **dadurch gekennzeichnet, daß** die n-Datenwörter als Datenfeld abgespeichert werden.

5. Verfahren nach Anspruch 4, **dadurch gekennzeichnet, daß** das Datenwort der Zeitmarke (tᵢ) nach dem Verstreichen der vorangegangenen Zeitmarke (tᵢ₋₁) in einen Ausgabespeicher geladen wird, der mit dem Eintreten der Zeitmarke (tᵢ) die Ausgabe des Datenworts bewirkt.

6. Verfahren nach einem der vorangegangenen Ansprüche, **dadurch gekennzeichnet, daß** das Positionssignal (PU) durch einen Sensor am Scannermotor erzeugt wird.

7. Schaltung zur Durchführung des Verfahrens nach Anspruch 1, **dadurch gekennzeichnet, dass** die Schaltung einen Mikrocontroller (1) und einen steuerbaren Ausgabespeicher (2) derart umfasst, dass der Mikrocontroller (1) die Funktionsblöcke Capture-Register (3) zum Aufnehmen des Positionspulses (PU), Timer (4), Berechnungseinheit (5) und Vergleicher (6) aufweist, wobei der Vergleicher (6) den Sollwert der von der Berechnungseinheit (5) gelieferten Zeitmarke mit der aktuellen Zeitmarke des Timers (4) vergleicht, so dass im Falle der Gleichheit der steuerbare Ausgabespeicher (2), der das auszugebende Datenwort von der Berechnungseinheit (5) geladen hat, dieses ausgibt.

8. Schaltung nach Anspruch 7, **dadurch gekennzeichnet, daß** der steuerbare Ausgabespeicher (2) durch ein Latch (2) realisiert ist.

9. Schaltung nach Anspruch 8, **dadurch gekennzeichnet, daß** zwischen dem Latch (2) und dem Vergleicher (6) ein Flip-Flop (7) zur Erzeugung eines Strobe-Pulses angeordnet ist, dessen Set-Eingang vom Vergleicher (6) und dessen Reset-Eingang von der Berechnungseinheit (5) angesteuert wird.

10. Schaltung nach Anspruch 9, **dadurch gekennzeichnet, daß** das auszugebende Datenwort einer Zeitmarke (tᵢ) über einen seriellen Bus von der Berechnungseinheit (5) in einen Seriell/Parallel-Wandler (8) gegeben wird, der die Daten für das Latch (2) aufbereitet.

11. Schaltung nach Anspruch 10, **dadurch gekennzeichnet, daß** der Seriell/Parallel-Wandler (8) und das Latch (2) durch ein PLD (9) gebildet wird, wobei mittels des Clock- und des Data-Eingangs des PLDs (9) das auszugebende Datenwort einer Zeitmarke (tᵢ) in das PLD (9) eingetaktet und mittels eines Strobe-Pulses in ein Ausgabelatch (10) des PLDs (9) geladen und ausgegeben wird.

12. Schaltung nach Anspruch 11, **dadurch gekennzeichnet, daß** nach erfolgter Ausgabe des Datenwortes einer Zeitmarke (tᵢ) durch das Latch (10) des PLD (9) das nächste auszugebende Datenwort seriell in das PLD (9) eingelesen werden kann.

13. Schaltung nach einem der Ansprüche 11 oder 12, **dadurch gekennzeichnet, daß** das PLD (9) zusätzlich als ein programmierbarer Capstan FG-Teiler verwendet wird.

## Claims

1. Method for producing synchronous digital control signals for a video recorder, including a rotating head drum wherein a position pulse (PU) which characterizes the period of a head drum revolution is used for the definition of a time zero point (t₀), **characterized by** the following steps:
a) calculation of all time markers (t₁-tₙ) of the control signals, which are required for the following period of a picture frame (F) and of the bit patterns of the control signals belonging to a time marker,
b) storage of the time markers (t₁-tₙ) and of the bit patterns to be output,
c) parallel output of the corresponding bit pattern for the corresponding time marker (t₁-tₙ).

2. Method according to claim 1, **characterized in that** the time zero point (to) coincides with the beginning of a video frame (F).

3. Method according to either of claims 1 and 2, **characterized in that** the bit pattern of a time marker (t₁, .. tₙ) is stored as a data word having a width of k bits.

4. Method according to claim 3, **characterized in that** the n data words are stored as a data field.

5. Method according to claim 4, **characterized in that** the data word of the time marker (tᵢ) is loaded into an output memory once the preceding time marker (tᵢ₋₁) has passed, which memory effects the output of the data word with the arrival of the time marker (tᵢ).

6. Method according to one of the preceding claims, **characterized in that** the position signal (PU) is produced by a sensor on the scanner motor.

7. Circuit for carrying out the method according to claim 1, **characterized in that** the circuit includes a microcontroller (1) and a controllable output memory (2) such that the microcontroller (1) has the functional blocks of capture register (3) for receiving the position pulse (PU), timer (4), calculation unit (5) and comparator (6), the comparator (6) comparing the desired value of the time marker supplied by the calculation unit (5) with the current time marker of the timer (4), with the result that, in the event of identity, the controllable output memory (2), which has loaded the data word, to be output, from the calculation unit (5) outputs the said data word.

8. Circuit according to claim 7, **characterized in that** the controllable output memory (2) is realized by a latch (2).

9. Circuit according to claim 8, **characterized in that** a flip-flop (7) for producing a strobe pulse is arranged between the latch (2) and the comparator (6) and the reset input of which flip-flop is driven by the calculation unit (5).

10. Circuit according to claim 9, **characterized in that** the data word, to be output, of a time marker (tᵢ) is passed via a serial bus from the calculation unit (5) into a serial/parallel converter (8), which conditions the data for the latch (2).

11. Circuit according to claim 10, **characterized in that** the serial/parallel converter (8) and the latch (2) are formed by a PLD (9), the data word, to be output, of a time marker (tᵢ) being clocked into an output latch (10) of the PLD (9) by means of a strobe pulse and being output.

12. Circuit according to claim 11, **characterized in that** once the data word of a time marker (tᵢ) has been output by the latch (10) of the PLD (9), the next data word to be output can be read serially into the PLD (9).

13. Circuit according to either of claims 11 or 12, **characterized in that** the PLD (9) is additionally used as a programmable capstan FG-divider.

## Revendications

1. Méthode pour la génération de signaux de commande synchrones numériques pour un enregistreur vidéo avec tambour de tête rotatif dans laquelle chaque impulsion de position (PU) caractéristique de la période d'une rotation du tambour de tête est utilisée pour définir un point temporel nul (t₀), **caractérisée par** les étapes suivantes :
a) calcul de tous les repères de temps (t₁ - tₙ) des signaux de commande qui sont nécessaires pour la période suivante d'un trame d'image (F) et du profil binaire des signaux de commande appartenant à un repère de temps,
b) mémorisation des repères de temps (t₁ - tₙ) et des profils binaires à éditer,
c) édition parallèle du profil binaire correspondant pour le repère de temps correspondant (t₁- tₙ).

2. Méthode selon la revendication 1, **caractérisée en ce que** le point temporel nul (t₀) coïncide avec le début d'une trame d'image (F).

3. Méthode selon l'une des revendications 1 ou 2, **caractérisée en ce que** le profil binaire d'un repère de temps (t₁, ... tₙ) est mémorisé en tant que mot de données large k bits.

4. Méthode selon la revendication 3, **caractérisée en ce que** les mots de données n sont mémorisés en tant que champ de données.

5. Méthode selon la revendication 4, **caractérisée en ce que** le mot de données du repère de temps (tᵢ) est chargé après expiration du repère de temps précédent (tᵢ₋₁) dans une mémoire de sortie qui entraîne l'édition du mot de données pour le repère de temps précis (tᵢ).

6. Méthode selon l'une des revendications précédentes, **caractérisée en ce que** le signal de position (PU) est généré par un capteur au niveau du moteur du scanner.

7. Circuit pour la mise en application de la méthode selon la revendication 1, **caractérisé en ce que** le circuit comporte un microcontrôleur (1) et une mémoire de sortie commandable (2) de sorte que le microcontrôleur (1) présente les blocs fonctionnels Registre de capture (3) pour l'enregistrement de l'impulsion de position (PU), Horloge (4), Unité de calcul (5) et comparateur (6), où le comparateur (6) compare la valeur de consigne du repère de temps fourni par l'unité de calcul (5) avec le repère de temps actuel de l'horloge (4), de sorte que, en cas d'égalité, la mémoire de sortie commandable (2) qui a chargé depuis l'unité de calcul (5) le mot de données à éditer le fournisse.

8. Circuit selon la revendication 7, **caractérisé en ce que** la mémoire de sortie commandable (2) est réalisée au moyen d'un verrou (2).

9. Circuit selon la revendication 8, **caractérisé en ce que** entre le verrou (2) et le comparateur (6), une bascule (7) est placée pour la génération d'une impulsion d'activation, son entrée Set étant commandée par le comparateur (6) et son entrée Reset par l'unité de calcul (5).

10. Circuit selon la revendication 9, **caractérisé en ce que** le mot de données à éditer d'un repère de temps est (tᵢ) est transmis via un bus série de l'unité de calcul (5) à un convertisseur série/parallèle (8) qui prépare les données pour le verrou (2).

11. Circuit selon la revendication 10, **caractérisé en ce que** le convertisseur série/parallèle (8) et le verrou (2) sont formés par un PLD (9), où au moyen de l'entrée d'horloge et de données du PLD (9) le mot de données à éditer d'un repère de temps est (tᵢ) est rythmé dans le PLD (9) et au moyen d'une impulsion d'activation chargé et édité dans le verrou de sortie (10) du PLD (9).

12. Circuit selon la revendication 11, **caractérisé en ce que** après l'édition du mot de données d'un repère de temps (tᵢ) via le verrou (10) du PLD (9), le mot de données suivant à éditer peut être lu en série dans le PLD (9).

13. Circuit selon la revendication 11 ou 12, **caractérisé en ce que** le PLD (9) est en outre utilisé comme un diviseur FG de cabestan programmable.
